# FASCICULE DE BREVET EUROPEEN

(11) **EP 1 389 026 B1**
(45) Date de publication et mention de la délivrance du brevet: **06.10.2010**
(21) Numéro de dépôt: 03291988.8
(22) Date de dépôt: 08.08.2003
(51) Int. Cl.: H04W 8/18

(54) **Dispositif et procédé de traitement de données de localisation pour un dispositif de téléphone mobile**
Vorrichtung und Verfahren zum Datenverarbeiten von standortdaten für ein mobiles Telefon
Device and method of processing location data for a mobile telephone

(30) Priorité: 08.08.2002 FR 0210084
(43) Date de publication de la demande: 11.02.2004
(73) Titulaire: Alcatel Lucent, 75008 Paris (FR)
(72) Inventeur: Bonnard, Pierre, 92150 Suresnes (FR); Nomain, Valérie, 75013 Paris (FR)
(74) Mandataire: Hedarchet, Stéphane

(56) Documents cités:
- EP-A- 1 119 211
- WO-A-00/04730
- FR-A1- 2 811 192
- US-A1- 2002 065 711
- US-A1- 2002 098 832

## Description

L'invention concerne le domaine de la téléphonie mobile, et plus particulièrement la gestion d'un dispositif de téléphonie mobile en fonction de sa position géographique.

Certains réseaux de communications, de type cellulaire, comprennent un coeur de réseau (ou « Core Network ») couplé à un réseau d'accès comportant une multiplicité de noeuds, permettant d'accéder au Core Network, et couplés à des stations de base qui contrôlent une ou plusieurs cellules à l'intérieur desquelles les dispositifs de téléphonie mobile peuvent échanger des données avec le réseau.

Lorsqu'un dispositif de téléphonie mobile pénètre dans une cellule d'un réseau cellulaire, celle-ci lui transmet des données de localisation constituant un jeu de paramètre(s) de géo-localisation, si bien qu'il sait à chaque instant dans quelle cellule, ou zone géographique, il se trouve. On entend ici par « zone géographique » un espace défini par, ou à partir de, une ou plusieurs cellules. Par ailleurs, on entend ici par « jeu de paramètre(s) de (géo-)localisation » un ou plusieurs identifiants de cellule(s), ainsi qu'éventuellement des informations radio représentatives, notamment, de la puissance de réception de la station de base contrôlant la cellule et/ou de la distance à la station de base contrôlant la cellule (ou « timing advance »). Ce jeu de paramètres de localisation permet, lorsque le dispositif de téléphonie mobile dispose de plusieurs profils de configuration de fonctionnement associés à des zones géographiques différentes, d'instaurer automatiquement la configuration qui correspond à la zone dans laquelle il pénètre sans que son utilisateur n'ait à intervenir. Ce type de dispositif de téléphonie mobile est notamment décrit dans le document brevet FR 2 811 192.

Ce fonctionnement automatisé est particulièrement intéressant, mais il requiert de l'utilisateur non seulement qu'il définisse chaque profil de configuration de fonctionnement, mais également qu'il définisse les zones géographiques associées à ces profils de configuration. Or, la définition des zones géographiques et leur association à des profils de configuration sont des opérations compliquées, notamment pour les téléphones mobiles. Certes, dans le document brevet FR 2 811 192, il est proposé d'effectuer les définitions à l'aide d'un ordinateur, mais cela nécessite, d'une part, un logiciel spécifique, et d'autre part, le transfert des définitions de l'ordinateur vers le téléphone mobile.

L'invention a donc pour but d'améliorer la situation.

Elle propose à cet effet un procédé de traitement de données de localisation pour un dispositif de téléphonie mobile susceptible d'être déplacé dans des zones géographiques d'un réseau de communications, définies par des jeux de paramètre(s) de localisation procédé dans lequel les étapes suivantes sont effectuées dans un dispositif de traitement de données de localisation implanté dans le dispositif de téléphone mobile: d'une part, on détecté à des instants choisis (par exemple toutes les 2 minutes) la zone géographique dans laquelle est situé le dispositif, puis on mémorise temporairement un jeu représentatif de la zone géographique détectée, et d'autre part, on analyse, selon des intervalles choisis (par exemple tous les trois jours), les jeux de paramètre(s) de localisation qui ont été mémorisés, de manière à ne conserver que les jeux de paramètre(s) de localisation qui satisfont à au moins un critère choisi.

Ainsi, les quelques zones géographiques (généralement deux ou trois), dans lesquelles l'utilisateur a l'habitude de se trouver, peuvent être détectées automatiquement par le dispositif de téléphonie mobile, puis stockées afin d'être associées à des profils de configuration de fonctionnement.

Le procédé selon l'invention pourra comporter des caractéristiques complémentaires, qui pourront être prise séparément et/ou en combinaison, et en particulier:
- on peut effectuer une détection périodique,
- on peut effectuer l'analyse en déterminant les différents jeux de paramètre(s) de localisation, puis en dénombrant ces jeux différents, afin de ne stocker que les jeux de paramètre(s) de localisation associés à un nombre supérieur à un seuil choisi, le franchissement de ce seuil, par valeur supérieure, constituant le critère choisi. En variante, après avoir effectué le dénombrement des jeux de paramètre(s) de localisation , on peut déterminer leurs proportions respectives les uns par rapport aux autres, afin de stocker chaque jeu de paramètre(s) de localisation associé à une proportion supérieure à un seuil choisi,
- la zone géographique détectée peut être mémorisée temporairement en correspondance d'au moins son instant de détection,
- le jeu de paramètre(s) de localisation peut être stocké, après analyse, en correspondance d'informations choisies. Dans ce cas, les informations peuvent être représentatives d'un intervalle de temps auquel est associé chaque jeu de paramètre(s) de localisation satisfaisant au critère choisi,
- on peut prévoir une étape additionnelle dans laquelle on associe aux jeux de paramètre(s) de localisation stockés un statut choisi. Dans ce cas, l'association de statut peut être effectuée de façon automatique en fonction des informations, ou à l'initiative de l'utilisateur du dispositif de téléphonie mobile, par exemple par sélection d'un statut parmi un ensemble de statuts affiché sur l'écran de son dispositif de téléphonie mobile. Par ailleurs, le statut est préférentiellement un champ associé à une configuration de fonctionnement du dispositif de téléphonie mobile. Un tel champ peut être choisi, par exemple, dans un groupe comprenant au moins le champ « lieu d'habitation », le champ « lieu de travail », et le champ « autre ». En outre, au moins deux jeux différents satisfaisant au critère choisi peuvent être associés à un même statut.

L'invention porte également sur un dispositif de traitement de données de localisation pour un dispositif de téléphonie mobile susceptible d'être déplacé dans des zones géographiques d'un réseau de communications, définies par un jeu de paramètre(s) de localisation. Ce dispositif se caractérise par le fait qu'il comporte des moyens de traitement agencés, d'une part, pour déterminer à des instants choisis la zone géographique dans laquelle est situé le dispositif de téléphonie mobile, puis mémoriser temporairement un jeu de paramètre(s) représentatif de la zone géographique détectée, et d'autre part, pour analyser, selon des intervalles choisis, les jeux de paramètre(s) de localisation mémorisés, de manière à stocker chaque jeu satisfaisant à au moins un critère choisi.

Le dispositif de traitement selon l'invention pourra comporter des caractéristiques complémentaires qui pourront être prises séparément et/ou en combinaison, et en particulier ses moyens de traitement peuvent :
- effectuer une détection périodique,
- effectuer l'analyse par une détermination des différents jeux, puis le dénombrement des jeux de paramètre(s) de localisation différents, afin de ne stocker que les jeux de paramètre(s) de localisation associés à un nombre supérieur à un seuil choisi, le franchissement de ce seuil, par valeur supérieure, constituant le critère choisi. En variante, après avoir effectué le dénombrement des jeux de paramètre(s) de localisation, les moyens de traitement peuvent déterminer leurs proportions respectives les uns par rapport aux autres, afin de stocker chaque jeu associé à une proportion supérieure à un seuil choisi,
- mémoriser temporairement la zone géographique détectée en correspondance d'au moins son instant de détection,
- stocker chaque jeu de paramètre(s) de localisation, après analyse, en correspondance d'informations choisies. Dans ce cas, les informations peuvent être représentatives d'un intervalle de temps auquel est associé chaque jeu satisfaisant au critère choisi,
- associer un statut choisi aux jeux de paramètre(s) de localisation stockés. Dans ce cas, l'association de statut peut être effectuée de façon automatique en fonction des informations, ou à l'initiative de l'utilisateur du dispositif de téléphonie mobile, par exemple par sélection d'un statut parmi un ensemble de statuts affiché sur l'écran de son dispositif. Par ailleurs, le statut est préférentiellement un champ associé à une configuration de fonctionnement du dispositif de téléphonie mobile. Un tel champ peut être choisi, par exemple, dans un groupe comprenant au moins le champ « lieu d'habitation », le champ « lieu de travail », et le champ « autre ». En outre, au moins deux jeux différents satisfaisant au critère choisi peuvent être associés à un même statut.

Par ailleurs, qu'il s'agisse du procédé ou du dispositif de traitement, chaque jeu de paramètre(s) de localisation peut comporter au moins un paramètre représentatif d'un identifiant de cellule du réseau, et certains jeux peuvent comporter au moins un paramètre complémentaire choisi dans un groupe comprenant au moins des informations radio représentatives de la puissance de réception de la station de base contrôlant la cellule et/ou de la distance à la station de base contrôlant la cellule.

L'invention porte également sur un dispositif de téléphonie mobile, susceptible d'être déplacé dans des zones géographiques d'un réseau de communications, définies par des jeux de paramètre(s) de localisation, et comprenant un dispositif de traitement du type de celui présenté ci-avant.

D'autres caractéristiques et avantages de l'invention apparaîtront à l'examen de la description détaillée ci-après, et des dessins annexés, sur lesquels :
- la figure 1 illustre de façon schématique une partie d'un réseau cellulaire de communications auquel sont raccordés des terminaux mobiles d'utilisateurs équipés d'un dispositif de traitement selon l'invention, et
- la figure 2 illustre de façon schématique un exemple de réalisation d'un dispositif de traitement selon l'invention implanté dans un terminal mobile d'utilisateur susceptible d'être raccordé à un réseau du type de celui illustré sur la figure 1.

Les dessins annexés pourront non seulement servir à compléter l'invention, mais aussi contribuer à sa définition, le cas échéant.

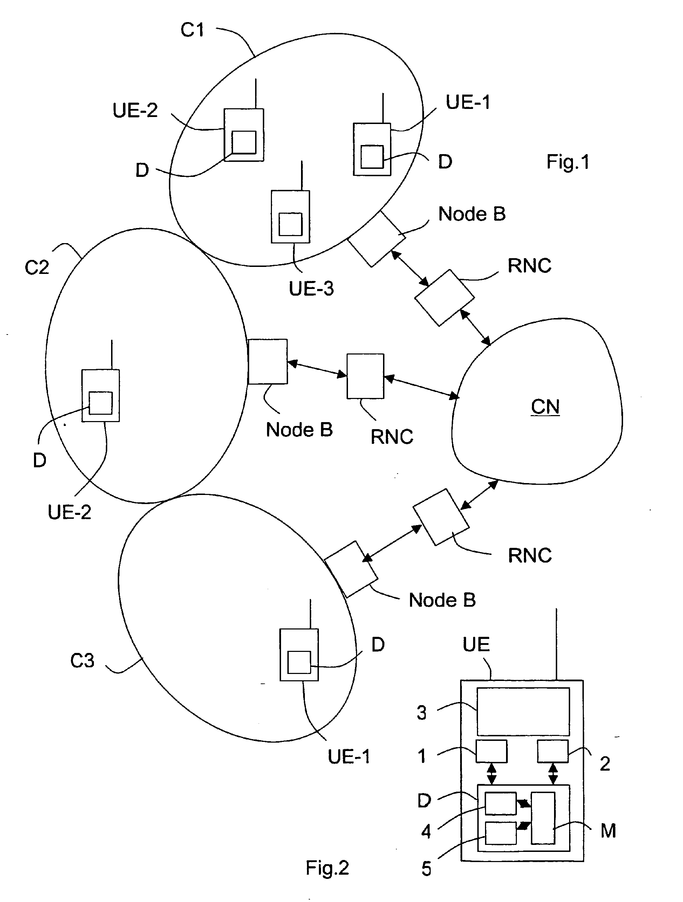

Le dispositif de traitement selon l'invention est destiné à être installé dans des dispositifs de téléphonie mobile (ou terminaux mobiles d'utilisateurs), tels que des téléphones portables, raccordés à un réseau public de communications de type PLMN (pour « Public Land Mobile Network »), comme par exemple les réseaux dits « 2G » ou « 2,5G », tels que les réseaux GSM ou GPRS, ou les réseaux dits « 3G », tels que le réseau UMTS. Un tel réseau est illustré sur la figure 1. Mais, l'invention n'est pas limitée à ces réseaux. Elle s'applique d'une manière générale à tous les réseaux cellulaires, et notamment aux réseaux TDMA, CDMA, CDMA-One, PHS et FOMA.

Ce type de réseau, dit cellulaire, peut, d'une façon très schématique mais néanmoins suffisante à la compréhension de l'invention, être résumé à un coeur de réseau (ou « Core Network » (CN)) couplé à un réseau d'accès comportant :
- plusieurs noeuds couplés au Core Network CN, via une interface, appelée lu. Ces noeuds sont appelés BSC (pour « Base Station Controller »), dans le cas des réseaux de type GSM ou GPRS, et RNC (pour « Radio Network Controller »), dans le cas des réseaux de type UMTS ; et
- plusieurs stations de base d'émission/réception, d'une part, associées chacune à une ou plusieurs cellules couvrant chacune une zone radio, et d'autre part couplées seules ou par groupe d'au moins deux à l'un des noeuds, via une interface logique, appelée lub. Ces stations de base sont appelées BTS dans le cas d'un réseau de type GSM (ou GPRS) et Node B dans le cas d'un réseau UMTS.

Dans ce qui suit on considère à titre d'exemple non limitatif, d'une part, que le réseau est de type UMTS, et d'autre part, que les dispositifs de téléphonie mobile sont des téléphones portables UE-i (ici, i = 1 à 3), éventuellement capables d'échanger des données selon le protocole WAP (pour « Wireless Application Protocol ») avec d'autres équipements du réseau. On considère également, à titre illustratif, que chaque station de base, ici un Node B, contrôle une unique cellule Cj (ici, j = 1 à 3) définissant une zone géographique (assimilée ci-après à la cellule Cj correspondante). Bien entendu, les Node Bs pourraient contrôler plusieurs cellules, et une zone géographique pourrait être définie par plusieurs cellules ou à partir de portions d'une ou plusieurs cellules (une zone géographique peut en effet, dans certains cas, être plus petite ou plus grande qu'une cellule).

Comme illustré sur la figure 2, le dispositif de traitement D selon l'invention est couplé au module de configuration de fonctionnement 1 et au module de localisation 2 du téléphone portable UE-i dans lequel il est implanté.

Le module de configuration de fonctionnement 1 est destiné à stocker des jeux de paramètres (ou profils) de configuration du fonctionnement du téléphone portable UE-i. Ces profils sont définis par l'utilisateur du téléphone portable UE-i, par exemple à l'aide de l'interface de saisie (clavier) couplée à l'écran 3 du téléphone.

A titre d'exemple non limitatif, un profil peut définir des réglages d'un paramètre de fonctionnement en fonction de la localisation du téléphone portable UE-i, comme par exemple l'activation ou la désactivation d'une sonnerie ou d'un renvoi d'appel, notamment vers une messagerie vocale ou un autre numéro de téléphone, l'utilisation d'une sonnerie plutôt qu'une autre, le réglage de l'heure locale, et analogue.

Un profil peut également définir les modalités de déclenchement d'un événement en fonction d'un changement de localisation du téléphone portable UE-i, comme par exemple la mise hors de fonctionnement, l'émission d'une sonnerie d'avertissement spécifique, notamment en cas de rendez-vous ou de course associé à une zone, et analogue.

Un profil peut en outre définir les modalités de fonctionnement du téléphone portable UE-i en fonction d'informations spécifiques émises par un Node B appartenant à une zone choisie, comme par exemple l'indication de présence à l'intérieur d'une zone, telle qu'une salle de spectacle ou un avion, où le fonctionnement du téléphone portable est interdit. Dans ces exemples, la réception des informations spécifiques met immédiatement le téléphone portable hors de fonctionnement.

Ces profils de configuration sont stockés en correspondance d'un statut préférentiellement constitué d'un champ, par exemple choisi dans un groupe comprenant au moins le champ « lieu d'habitation » (ou « Home »), le champ « lieu de travail » (ou « Office »), le champ « autre » (ou « Other »), le champ « rendez-vous » (ou « Meeting »), et le champ « lieu public » (ou « Public area »).

Le module de localisation 2 est destiné à mémoriser des données de localisation agencées sous la forme d'un jeu de paramètre(s) de (géo)-localisation définissant la zone géographique (de localisation) Cj dans laquelle est situé le téléphone portable UE-i qu'il équipe. Un tel jeu comporte généralement un ou plusieurs identifiants de cellule(s), ainsi qu'éventuellement des informations radio représentatives, notamment, de la puissance de réception de la station de base (Node B) contrôlant la cellule et/ou de la distance à la station de base (Node B) contrôlant la cellule (ou « timing advance »). L'identifiant est généralement un code de localisation, identique pour tous les Node Bs qui constituent une même zone géographique de localisation, définie par l'opérateur du réseau. Lorsqu'un téléphone portable UE-i change de zone géographique de localisation, il échange des informations avec le réseau, et notamment avec le Node B le plus proche qui lui fournit son jeu de paramètre(s). L'opérateur peut ainsi localiser le téléphone portable UE-i avec une précision qui dépend de la taille des zones géographiques de localisation, et notamment du nombre de Node Bs qu'elles contiennent.

Par exemple, comme illustré sur la figure 1, un premier utilisateur d'un premier téléphone portable UE-1 et un second utilisateur d'un second téléphone portable UE-2 travaillent tous les deux dans une première zone géographique (de localisation) C1. Par ailleurs, le second utilisateur réside dans une seconde zone géographique C2, tandis que le premier utilisateur réside dans une troisième zone C3. Les premier et second téléphones portables UE-1 et UE-2 disposent chacun de deux profils de configuration associés respectivement aux champs « lieu de travail » et « lieu d'habitation ». Lorsque le premier ou le second utilisateur pénètre dans la première zone C1 pour se rendre à son bureau, le module de configuration 1 de son téléphone portable sélectionne le profil de configuration associé à la première zone C1 qui correspond au champ « lieu de travail », puis il configure le téléphone portable avec le jeu sélectionné.

De même, lorsque le premier (ou second) utilisateur quitte son bureau pour rentrer à son domicile, dès qu'il pénètre dans la troisième zone C3 (ou seconde zone C2), le module de configuration 1 de son téléphone portable sélectionne le profil de configuration associé à la troisième zone C3 (ou seconde zone C2) qui correspond au champ « lieu d'habitation », puis il configure le téléphone portable avec le profil sélectionné.

Le dispositif de traitement D comporte un module de traitement de données M agencé, tout d'abord, pour déterminer la zone géographique Cj dans laquelle est situé le téléphone portable UE-i qu'il équipe. Pour ce faire, il interroge le module de localisation 2 du téléphone portable UE-i, de préférence périodiquement. La périodicité est par exemple égale à 2 ou 3 minutes (ou toute autre valeur, selon les besoins). Une fois en possession du jeu de paramètre(s) définissant la zone géographique, le module de traitement M le mémorise temporairement, par exemple dans une mémoire tampon 4. Cette mémorisation peut éventuellement s'effectuer en correspondance de l'instant de détection. Dans ce cas, l'instant de détection comprend l'heure de détection, ainsi qu'éventuellement la date de la détection (ou le jour de la semaine).

Le module de traitement M est en outre agencé pour analyser, selon des intervalles choisis, les jeux qui sont mémorisés dans la mémoire tampon 4, de manière à stocker dans une mémoire 5 chaque jeu qui satisfait à au moins un critère choisi. Ce stockage peut éventuellement s'effectuer en correspondance d'informations choisies. L'intervalle (ou période) est par exemple égal à deux ou trois jours (ou toute autre valeur, selon les besoins, dès lors qu'elle permet le stockage temporaire d'un nombre significatif d'identifiants, par exemple cinquante ou cent).

L'analyse effectuée par le module de traitement M consiste, de préférence, à extraire de la mémoire tampon 4 les jeux stockés, puis à dénombrer chaque jeu différent, de manière à comparer le nombre qui lui est associé à un seuil. Si ce nombre est supérieur au seuil, alors le jeu est retenu et stocké dans la mémoire 5, éventuellement en correspondance d'informations choisies.

En variante, lorsque chacun des différents jeux a été dénombré, on compare les nombres qui leurs sont associés, et l'on détermine leurs 5 proportions respectives par rapport au nombre total d'identifiants acquis pendant l'intervalle temporel choisi. Puis, on retient les identifiants dont la proportion est supérieure à un seuil, par exemple égal à 25 %.

Le module de traitement M peut être éventuellement agencé de manière à effectuer des opérations sur certains jeux de paramètres mémorisés temporairement, afin de déterminer si deux de ces jeux de paramètres correspondent ou non à une même (géo-)localisation, en fonction de la précision recherchée.

Préférentiellement, les informations, qui sont éventuellement associées aux jeux retenus, sont représentatives de l'intervalle de temps pendant lequel lesdits jeux ont été détectés, ainsi qu'éventuellement du ou des jours de la semaine correspondant.

L'association des profils de configuration aux différentes zones géographiques Cj désignées par les jeux stockés dans la mémoire 5 peut s'effectuer comme suit.

Une première solution consiste, lorsque les jeux de paramètre(s) de localisation ont été stockés en correspondance d'informations temporelles, à agencer le module de traitement M de sorte qu'il détermine lui-même à quels profils les zones géographiques de localisation correspondent respectivement, en fonction des intervalles temporels d'appartenance des jeux (et éventuellement des jours de la semaine) et grâce à une grille temporelle mémorisée en correspondance des champs associés aux statuts mémorisés dans le module de configuration 1.

Par exemple, lorsque le jeu de paramètre(s) de localisation a été mémorisé dans la mémoire 5 en correspondance des intervalles temporels [8H30 - 12H00] et [14H00 ― 19H00] plusieurs jours ouvrés de suite, on considère qu'il correspond au lieu de travail de l'utilisateur. Par conséquent, le jeu de paramètre(s) de localisation peut être associé au champ « lieu de travail » et donc au profil de configuration qui lui correspond dans le module de configuration 1. En revanche, lorsque le jeu de paramètre(s) de localisation a été mémorisé dans la mémoire 5 en correspondance des intervalles temporels [19H30 - 8H00] et [12H30 - 13H30] plusieurs jours ouvrés de suite, ou de l'intervalle [0H00 - 24H00] pendant le week-end, on considère qu'il correspond au lieu d'habitation de l'utilisateur. Par conséquent, le jeu de paramètre(s) de localisation peut être associé au champ « lieu d'habitation » et donc au profil de configuration qui lui correspond dans le module de configuration 1.

Pour effectuer l'association automatique, le module de traitement M doit donc connaître les différents champs associés aux différents profils de configuration dans le module de configuration 1, et être agencé de manière à alimenter ce module de configuration 1 avec les données qui définissent les zones géographiques de localisation Cj et les champs correspondant, afin que le module de configuration les stockent en correspondance des profils de configuration associés auxdits champs, respectivement.

Deux cas peuvent être envisagés, selon qu'un champ est déjà, ou non, associé à un profil de configuration. Un profil de configuration peut en effet être associé à une ou plusieurs zones géographiques (de localisation). Par conséquent, si le profil désigné par le module de traitement n'est pas encore associé à une zone, celle-ci est automatiquement associée au champ. En revanche, si le profil désigné est déjà associé à une zone, soit ladite zone est identique à celle désignée et la procédure d'association prend fin, soit elle est différente, et dans ce cas le module de traitement M propose à l'utilisateur, par exemple sur son écran 3, d'associer cette nouvelle zone à l'ancienne, en correspondance du profil de configuration, ou de remplacer l'ancienne zone par la nouvelle. Bien entendu, une option peut également permettre à l'utilisateur de refuser l'association proposée par le module de traitement M ou de choisir une autre association.

Une seconde solution consiste à agencer le module de traitement M de sorte qu'il fonctionne comme dans la seconde solution, à l'exception de l'association automatique. Ici, le module de traitement M ne procède pas lui-même à l'association. Il vérifie d'abord si la zone est déjà associée au champ auquel il souhaite l'associer. Si tel est le cas, la procédure d'association prend fin. Dans le cas contraire, il soumet la proposition d'association à l'utilisateur, par exemple en affichant sur l'écran 3 les informations relatives à l'association proposée.

De nouveau deux cas peuvent être envisagés, selon qu'un champ est déjà, ou non, associé à un profil de configuration. Par conséquent, si le profil désigné par le module de traitement M n'est pas encore associé à une zone, le module de traitement M propose à l'utilisateur, par exemple sur son écran 3, de l'associer à la nouvelle zone détectée. L'utilisateur peut alors refuser ou accepter l'association. S'il l'accepte, le module de traitement M ordonne au module de configuration 1 de sauvegarder les données de la zone en correspondance du champ qu'il a choisi. Si l'utilisateur refuse, soit la procédure prend fin, soit l'utilisateur sélectionne sur son écran 3 un autre champ que celui proposé, de sorte qu'il soit associé à la zone détectée. Le module de traitement M ordonne ensuite au module de configuration 1 de sauvegarder les données de la zone en correspondance du champ choisi par l'utilisateur.

En revanche, si le profil désigné est déjà associé à une zone différente de celle proposée par le module de traitement M, ce dernier propose à l'utilisateur, par exemple sur son écran 3, soit d'associer cette nouvelle zone à l'ancienne, en correspondance du profil de configuration, soit de remplacer l'ancienne zone par la nouvelle.

Lorsque le module de traitement M ne stocke pas les jeux de paramètres de zones en correspondance d'informations temporelles, il ne peut donc pas proposer d'association choisie à l'utilisateur. Par conséquent, il présente les zones géographiques retenues à l'utilisateur, qui décide alors de les associer ou non à des statuts dans les mêmes conditions que celles présentées ci-avant.

Préférentiellement, le module de traitement M adresse automatiquement à l'utilisateur sa proposition d'association lorsqu'il pénètre dans la zone qui satisfait au critère et qui fait l'objet de l'éventuelle proposition. Dans une première variante, la proposition est soumise à l'utilisateur dès que le module de traitement M a terminé l'analyse des jeux de paramètre(s) de localisation mémorisés temporairement dans la mémoire tampon 4, et qu'il en a éventuellement stocké certains dans la mémoire 5. Dans une seconde variante, la proposition d'association (ou seulement la zone retenue) n'est soumise à l'utilisateur que lorsque celui-ci décide de charger le menu de configuration proposé par le module de configuration 1, ou le menu d'association proposé par le module de traitement M. Ces deux variantes sont cependant moins pratiques car elles nécessitent la description des zones proposées à une association.

Si l'utilisateur choisit d'associer la nouvelle zone à l'ancienne, le module de traitement M ordonne au module de configuration 1 de sauvegarder les données de la nouvelle zone en correspondance du champ choisi par l'utilisateur et des données de la précédente zone. Si l'utilisateur refuse l'association proposée par le module de traitement M, soit la procédure prend fin, soit l'utilisateur sélectionne sur son écran 3 un autre champ que celui proposé, de sorte qu'il soit associé à la zone détectée. Le module de traitement M ordonne ensuite au module de configuration 1 de sauvegarder les données de la zone en correspondance du champ choisi par l'utilisateur.

Préférentiellement, lorsque l'association a été effectuée, le module de traitement M génère un message indiquant l'opération qui a été effectuée. Par exemple, le message qui s'affiche sur l'écran 3 est du type « La zone a été ajoutée au champ « lieu de travail » », ou « La nouvelle zone remplace la zone précédemment associée au champ « lieu de travail » », ou encore « Aucune modification n'a été effectuée ».

Plusieurs options peuvent être proposées par le module de traitement M à l'utilisateur, sur son écran 3. Par exemple, une option peut proposer à l'utilisateur de désactiver (ou d'activer) le fonctionnement du module de traitement M. Une autre option peut, par exemple, proposer à l'utilisateur des informations (ou descriptions) sur les zones associées aux profils de configuration ou sur les zones proposées à une association. Une troisième option peut présenter les modes de fonctionnement du module de traitement M.

Par ailleurs, afin d'éviter qu'un trop grand nombre de jeux de paramètre(s) ne fasse l'objet d'une mémorisation temporaire dans la mémoire tampon 4 entre deux analyses, le module de traitement M peut être agencé pour « filtrer » périodiquement lesdits jeux de paramètre(s) de localisation Ce filtrage peut consister, par exemple, à ne retenir que les jeux de paramètre(s) de localisation qui demeurent sensiblement identiques sur un intervalle temporel choisi. Cet intervalle peut être, par exemple, égal à 10 ou 20 minutes. Ce type de filtrage peut avantageusement fournir des informations temporelles au module de traitement M, qu'il peut, par exemple, stocker dans la mémoire 5 en correspondance des jeux de paramètres retenus, sans avoir au préalable mémorisé temporairement dans la mémoire tampon 4 les instants de détection (heure et/ou date) desdits jeux de paramètre(s) de localisation.

Le module de traitement M peut être réalisé sous la forme de circuits électroniques, de modules logiciels (ou informatiques), ou d'une combinaison de circuits et de logiciels.

L'invention offre également un procédé de traitement de données de localisation pour un dispositif de téléphonie mobile UE-i susceptible d'être déplacé dans les zones géographiques de localisation d'un réseau de communications, définies par des jeux de paramètre(s) de localisation.

Celui-ci peut être mis en oeuvre à l'aide du dispositif de traitement D et du dispositif de téléphonie mobile UE-i présentés ci-avant. Les fonctions et sous-fonctions principales et optionnelles assurées par les étapes de ce procédé étant sensiblement identiques à celles assurées par les différents moyens constituant les dispositif de traitement D et de téléphonie mobile UE-i, seules seront résumées ci-après les étapes mettant en oeuvre les fonctions principales du procédé selon l'invention.

Ce procédé consiste, d'une part, à détecter à des instants choisis la zone géographique dans laquelle est situé le dispositif de téléphonie mobile UE-i, puis à mémoriser temporairement un jeu de paramètre(s) représentatif de la zone géographique Cj détectée, éventuellement en correspondance d'au moins l'instant de détection, et d'autre part, à analyser, selon des intervalles choisis, les jeux de paramètre(s) de localisation qui ont été mémorisés, de manière à ne conserver que les jeux de paramètre(s) de localisation qui satisfont à au moins un critère choisi, et à les stocker en correspondance, éventuellement, d'informations choisies.

Préférentiellement, le procédé selon l'invention comporte une étape additionnelle dans laquelle on associe aux jeux de paramètre(s) de localisation stockés un statut choisi, soit de façon automatique en fonction des éventuelles informations, soit à l'initiative de l'utilisateur du dispositif de téléphonie mobile UE-i, par exemple par sélection d'un statut parmi un ensemble de statuts affiché sur l'écran 3 de son dispositif de téléphonie mobile UE-i.

L'invention ne se limite pas aux modes de réalisation de procédé, dispositif de traitement et dispositif de téléphonie mobile décrits ci-avant, seulement à titre d'exemple, mais elle englobe toutes les variantes que pourra envisager l'homme de l'art dans le cadre des revendications ci-après.

## Revendications

1. Procédé de traitement de données de localisation pour un dispositif de téléphonie mobile (UE-i) susceptible d'être déplacé dans des zones géographiques (Cj) d'un réseau de communications, lesdites zones géographiques (Cj) étant définies par des jeux d'au moins un paramètre de localisation,
**caractérisé en ce qu'**il comprend les étapes suivantes effectuées dans un dispositif (D) de traitement de données de localisation implanté dans le dispositif de téléphonie mobile (UE-i) :
i) détection de la zone géographique (Cj) dans laquelle est situé ledit dispositif de téléphonie mobile (UE-i), à des instants prédéterminés,
ii) mémorisation temporaire d'un jeu de paramètre(s) de localisation représentatif de ladite zone géographique détectée,
iii) analyse, desdits jeux de paramètre(s) de localisation mémorisés, selon des intervalles choisis,
iv) stockage de chaque jeu de paramètre(s) de localisation satisfaisant à au moins un critère choisi.

2. Procédé selon la revendication 1, **caractérisé en ce que** ladite détection est périodique.

3. Procédé selon l'une des revendication 1 et 2, **caractérisé en ce que** ladite analyse consiste à déterminer tous les jeux de paramètre(s) de localisation différents, puis à dénombrer chacun desdits jeux de paramétre(s) de localisation différents, et **en ce que** l'on stocke chaque jeu de paramètre(s) de localisation associé à un nombre supérieur à un seuil choisi, le franchissement dudit seuil par valeur supérieure constituant ledit critère choisi.

4. Procédé selon l'une des revendications 1 et 2, **caractérisé en ce que** ladite analyse consisté à déterminer tous les jeux de paramètre(s) de localisation différents, puis à dénombrer chacun desdits jeux de paramètre(s) de localisation différents de manière à déterminer leurs proportions respectives les uns par rapport aux autres, et **en ce que** l'on stocke chaque jeu de paramètre(s) de localisation associé à une proportion supérieure à un seuil choisi, lé franchissement dudit seuil par valeur supérieure constituant ledit critère choisi.

5. Procédé selon l'une des revendications 1 à 4, **caractérisé en ce que** ladite zone géographique détectée est mémorisée temporairement en correspondance d'au moins son instant de détection.

6. Procédé selon l'une des revendications 1 à 5, **caractérisé en ce que** ledit jeu de paramètre(s) de localisation est stocké, après analyse, en correspondance d'informations choisies.

7. Procédé selon l'une des revendications 5 et 6, **caractérisé en ce que** lesdites informations sont représentatives d'un intervalle de temps auquel est associé chaque jeu de paramètre(s) de localisation satisfaisant audit critère choisi.

8. Procédé selon l'une des revendications 1 à 7, **caractérisé en ce qu'**il comprend une étape additionnelle dans laquelle on associe auxdits jeux de paramètre(s) de localisation stockés un statut choisi.

9. Procédé selon la revendication 8 en combinaison avec l'une des revendications 6 et 7, **caractérisé en ce que** ladite association de statut est effectuée de façon automatique en fonction desdites informations.

10. Procédé selon la revendication 8, **caractérisé en ce que** ladite association de statut est initiée par l'utilisateur dudit dispositif de téléphonie mobile (UE-i), par sélection d'un statut parmi un ensemble de statuts affiché sur un écran de son dispositif de téléphonie mobile (UE-i).

11. Procédé selon l'une des revendications 8 à 10, **caractérisé en ce que** ledit statut est un champ associé à une configuration de fonctionnement dudit dispositif de téléphonie mobile (UE-i),

12. Procédé selon la revendication 11, **caractérisé en ce que** ledit champ est choisi dans un groupe comprenant au moins le champ « lieu d'habitation », le champ « lieu de travail », et le champ « autre ».

13. Procédé selon l'une des revendications 8 à 12, **caractérisé en ce que** ladite configuration de fonctionnement est définie par l'utilisateur dudit dispositif de téléphonie mobile (UE-i).

14. Procédé selon l'une des revendications 8 à 13, **caractérisé en ce qu'**au moins deux jeux de paramètre(s) de localisation différents satisfaisant audit critère peuvent être associés à un même statut.

15. Procédé selon l'une des revendications 1 à 14, **caractérisé en ce que** chaque jeu de paramètre(s) de localisation comporte au moins un paramètre représentatif d'un identifiant de cellule du réseau.

16. Procédé selon la revendication 15, **caractérisé en ce que** certains jeux de paramètre(s) de localisation comportent au moins un paramètre complémentaire choisi dans un groupe comprenant au moins des informatisons radio représentatives de la puissance de réception d'une station de base (Node B) contrôlant ladite cellule et/ou de la distance à la station de base (Node B) contrôlant ladite cellule.

17. Dispositif de traitement de données de localisation (D) pour un dispositif de téléphonie mobile (UE-i) susceptible d'être déplacé dans des zones géographiques (Cj) d'un réseau de communications, définies par des jeux d'au moins un paramètre de localisation, **caractérisé en ce qu'**il comporte des moyens de traitement (M) agencés pour i) déterminer à des instants choisis la zone géographique (Cj) dans laquelle est situé ledit dispositif de téléphonie mobile (UE-i), puis mémoriser temporairement un jeu de paramètre(s) représentatif de ladite zone géographique détectée, et ii) analyser, selon des intervalles choisis, lesdits jeux de paramètre(s) de localisation mémorisés, de manière à stocker chaque jeu de paramètre(s) de localisation satisfaisant à au moins un critère choisi.

18. Dispositif selon la revendication 17, **caractérisé en ce que** lesdits moyens de traitement (M) sont agencés pour effectuer ladite détection de façon périodique.

19. Dispositif selon l'une des revendications 17 et 18, **caractérisé en ce que** lesdits moyens de traitement (M) sont agencés pour effectuer ladite analyse à partir d'une détermination des différents jeux de paramètre(s) de localisation, puis d'un dénombrement de chacun desdits jeux de paramètre(s) de localisation différents, et pour stocker chaque jeu de paramètre(s) de localisation associé à un nombre supérieur à un seuil choisi, le franchissement dudit seuil par valeur supérieure constituant ledit critère choisi.

20. Dispositif selon l'une des revendications 17 et 18, **caractérisé en ce que** lesdits moyens de traitement (M) sont agencés pour effectuer ladite analyse à partir d'une détermination des différents jeux de paramètre(s) de localisation, puis d'un dénombrement de chacun desdits jeux de paramètre(s) de localisation différents de manière à déterminer leurs proportions respectives les uns par rapport aux autres, et pour stocker chaque jeu de paramètre(s) de localisation associé à une proportion supérieure à un seuil choisi, le franchissement dudit seuil par valeur supérieure constituant ledit critère choisi.

21. Dispositif selon l'une des revendications 17 à 20, **caractérisé en ce que** lesdits moyens de traitement (M) sont agencés pour mémoriser temporairement ladite zone géographique détectée en correspondance d'au moins son instant de détection.

22. Dispositif selon l'une des revendications 17 à 21, **caractérisé en ce que** lesdits moyens de traitement (M) sont agencés pour stocker ledit jeu de paramètre(s) de localisation, après analyse, en correspondance d'informations choisies.

23. Dispositif selon l'une des revendications 21 et 22, **caractérisé en ce que** lesdites informations sont représentatives d'un intervalle de temps auquel est associé chaque jeu de paramètre(s) de localisation satisfaisant audit critère choisi.

24. Dispositif selon l'une des revendications 17 à 24, **caractérisé en ce que** lesdits moyens de traitement (M) sont agencés pour associer auxdits jeux de paramètre(s) de localisation stockés un statut choisi.

25. Dispositif selon la revendication 24 en combinaison avec l'une des revendications 22 et 23, **caractérisé en ce que** lesdits moyens de traitement (M) sont agencés pour effectuer ladite association de statut de façon automatique en fonction desdites informations.

26. Dispositif selon la revendication 24, **caractérisé en ce que** lesdits moyens de traitement (M) sont agencés pour effectuer ladite association de statut après sélection par l'utilisateur dudit dispositif de téléphonie mobile (UE-i) d'un statut parmi un ensemble de statuts affiche sur un écran de son dispositif de téléphonie mobile (UE-i).

27. Dispositif selon l'une des revendications 24 à 26, **caractérisé en ce que** ledit statut est un champ associé à une configuration de fonctionnement dudit dispositif de téléphonie mobile (UE-i).

28. Dispositif selon la revendication 27, **caractérisé en ce que** ledit champ est choisi dans un groupe comprenant au moins le champ « lieu d'habitation », le champ lieu de travail », et le champ « autre ».

29. Dispositif selon l'une des revendications 24 à 28, **caractérisé en ce que** ladite configuration de fonctionnement est définie par l'utilisateur dudit dispositif de téléphonie mobile (UE-1).

30. Dispositif selon l'une des revendications 24 à 29. **caractérisé en ce que** lesdits moyens de traitement (M) sont agencés pour associer au moins deux jeux de paramètre(s) de localisation différents, satisfaisant audit critère. à un même statut.

31. Dispositif selon l'une des revendications 17 à 30, **caractérisé en ce que** chaque jeu de paramètre(s) de localisation comporte au moins un paramètre représentatif d'un identifiant de cellule du réseau.

32. Dispositif selon la revendication 31, **caractérisé en ce que** certains jeux de paramétre(s) de localisation comportent au moins un paramètre complémentaire choisi dans un groupe comprenant au moins des informations radio représentatives de la puissance de réception de la station de base (Node B) contrôlant ladite cellule et/ou de la distance à la station de base (Node B) contrôlant ladite cellule,

33. Dispositif de téléphonie mobile (UE-i), susceptible d'être déplacé dans des zones géographiques (Cj) d'un réseau de communications, définies par des jeux d'au moins un paramètre dé localisation, **caractérisé en ce qu'**il comprend un dispositif de traitement (D) selon l'une des revendications 17 à 32.

## Claims

1. A method for processing location data fort mobile telephony device (UE-i) capable of being moved within geographic areas (Cj) of a communications network, said geographic areas (Cj) being defined by sets of at least one location parameter, **characterized in that** it comprises the following steps carried out within a device (D) for processing location data installed within the mobile telephony device CUE-i):
i) detecting the geographic area (Cj) in which said mobile telephony device (UE-i) is located, at predetermined moments,
ii) temporarily saving a set of location parameter(s) representative of said detected geographic area,
iii) analyzing said sets of saved location parameter(s), at chosen intervals,
iv) storing each set of location parameter(s) satisfying at least one chosen criterion.

2. A method according to claim 1, **characterized in that** said detection is periodic,

3. A method according to one of the claims 1 and 2, **characterized in that** said analysis consists of determining all of the different sets of location parameter(s), then counting each of said sets of different location parameter(s), and **in that** each set of location parameter(s) associated with a number greater than a chosen threshold is stored, the crossing of said threshold by a greater value constituting said chosen criterion.

4. A method according to one of the claims 1 and 2, **characterized in that** said analysis consists of determining all the different sets of location parameters, then counting each of said different location parameters so as to determine their respective proportions with regard to one another, and that each set of location parameter(s) associated with a proportion greater than a chosen threshold is stored, the crossing of said threshold by a greater value constituting said chosen criterion.

5. A method according to one of the claims 1 to 4, **characterized in that** said detected geographic area is temporarily saved as a match of at feast the moment when it was detected.

6. A method according to one of the claims 1 to 5, **characterized in that** said set of location parameter(s) is stored, after being analyzed, as a match of the chosen information.

7. A method according to one of the claims 5 and 6, **characterized in that** said information is representative of an interval of time with which each set of location parameter(s) satisfying said chosen criterion is associated.

8. A method according to one of the claims 1 to 7, **characterized in that** it comprises an additional step in which said stored sets of location parameter(s) are associated with a chosen status.

9. A method according to claim 8, in combination with one of the claims 6 or 7, **characterized in that** said status association is performed automatical based on said information.

10. A method according to claim 8, **characterized in that** said status association is initiated by the user of said mobile telephony device (UE-i), by selecting a status from among a set of statuses displayed on a screen of his or her mobile telephony device (UE-i).

11. A method according to one of the claims 8 to 10, **characterized in that** said status is a field associated with an operating configuration of said mobile telephony device (UE-i).

12. A method according to claim 11, **characterized in that** said field is chosen from a group comprising at least the "home" field, the "office" field, and the "other" field,

13. A method according to one of the claims 8 to 12, **characterized in that** said operating configuration is defined by the user of said mobile telephony device (UE-i).

14. A method according to one of the claims 8 to 13, **characterized in that** at least two different sets of location parameters satisfying said criterion may be associated with a single status.

15. A method according to one of the claims 1 to 14, **characterized in that** each set of location parameters) comprises at least one parameter representative of the network's cell identifier.

16. A method according to claim 15, **characterized in that** some sets of location parameter(s) comprise at least one additional parameter chosen from a group comprising at least radio information representative of the reception power of a base station (Node B) controlling said cell and/or the distance from the base station (Node B) controlling said cell.

17. A location data processing device (D) for a mobile telephony device (UE-i) capable of being moved within geographic areas (Cj) of a communications network, defined by sets of at least one location parameter, **characterized in that** it comprises processing means (M) configured to i) determine at chosen moments the geographic area (Cj) in which said mobile telephony device (UE-i) is Seated, then to temporarily save a set of parameter(s) representative of said detected geographic ares, and to ii) analyze, at chosen intervals, said set of saved location parameter() so as to store each set of location parameter (s) satisfying at least one chosen criteria.

18. A device according to claim 17, **characterized in that** said processing means (M) are configured to perform said detection periodically.

19. A device according to one of the claims 17 and 18, **characterized in that** said processing means (M) are configured to perform said analysis based on a determination of said sets of location parameter(s), then counting each of said sets of different location parameter(s), and to store each set of location parameter(s) associated with a number greater than the chosen threshold, the crossing of said threshold by a greater value constituting said chosen criterion.

20. A device according to one of the claims 17 and 18, **characterized in that** said processing means (M) are configured to perform said analysis based on a determination of said sets of location parameter(s), then counting each of said sets of different location parameter(s) so as to determine their respective proportions with regard to one another, and to store each set of location parameter(s) associated with a proportion greater than a chosen threshold, the crossing of said threshold by a greater value constituting said chosen criterion.

21. A device according to one of the claims 17 to 20, **characterized in that** said processing means (M) are configured to temporarily save said detected geographic area as a match for at least the moment when it was detected.

22. A device according to one of the claims 17 to 21, **characterized in that** said processing means (M) are configured to store said set of location parameter(s), after analysis, as a match for chosen information.

23. A device according to one of the claims 21 and 22, **characterized in that** said information is representative of an interval of time with which is associated each set of location parameter(s) satisfying said chosen criterion.

24. A device according to one of the claims 17 to 24, **characterized in that** said processing means (M) are configured to associate a chosen status with said sets of location parameter(s).

25. a device according to claim 24 in combination with one of the claims 22 and 23, **characterized in that** said processing means (M) are configured to perform said status association automatically based on said information.

26. A device according to claim 24, **characterized in that** said processing means (M) are configured to perform said status association after the user of said mobile telephony device (UE-i) selects a status from among a set of statuses displayed on a screen of his or her mobile telephony device (UE-i).

27. A device according to one of the claims 24 to 26, **characterized in that** said status is a field associated with an operating configuration of said mobile telephony device (UE-i),

28. A device according to claim 27, **characterized in that** said field is chosen from a group comprising at least the "home" field, the "office" field, and the "other" field.

29. A device according to one of the claims 24 to 28, **characterized in that** said operating configuration is defined by the user of said mobile telephony device (UE-i).

30. A device according to one of the claims 24 to 29, **characterized in that** said processing means (M) are configured to associate at least two sets of different location parameters), satisfying said criterion, with a single status.

31. A device according to one of the claims 17 to 30, **characterized in that** each set of location parameter(s) comprises at least one parameter representative of the network's cell identifier.

32. A device according to claim 31, **characterized in that** some sets of location parameter(s) comprise at least one additional parameter chosen from a group comprising at least radio information representative of the reception power of a base station (Node B) controlling said cell and/or the distance from the base station (Node B) controlling said cell.

33. A mobile telephony device (UE-i), capable of being moved within geographic areas (Cj) of a communications network, defined by sets of at least one location parameter, **characterized in that** it comprises a processing device (D) according to one of the claims 17 to 32.

## Patentansprüche

1. Verfahren zur Verarbeitung von Lokalisierungsdaten für ein mobiles Telefongerät (UE-i), welches in geografischen Zonen (Cj) eines Kommunikätionsnetzwerks bewegt werden kann, wobei die besagten geografischen Zonen (Cj) durch Sätze von mindestens einem Lokalisierungsparameter definiert sind,
**dadurch gekennzeichnet, dass** es die folgenden Schritte, welche in einer in dem mobilen Telefongerät (UE-i) integrierten Lokalisierungsdatetiverarbeitungsvorrichtung (D) ausgeführt werden, umfasst:
i) Erkennen der geografischen Zone (Cj), in welcher sich das besagte mobile Telefongerät (UE-i) zu vorgegebenen Zeitpunkten befindet,
ii) Zwischenspeichern eines für die besagte erkannte geografische Zone repräsentativen Satzes von einem oder mehreren Lokalisierungsparameter(n),
iii) Analyse der besagten gespeicherten Sätze bestehend aus einem oder mehreren Lokalisierungsparameter(n) gemäß ausgewählten Zeitabständen,
iv) Speicherung eines jeden Satzes von einem oder mehreren Lokalisierungsparameter(n), welcher mindestens einem ausgewählten Kriterium entspricht.

2. Verfahren nach Anspruch 1, **dadurch gekennzeichnet, dass** die besagte Erkennung periodisch erfolgt.

3. Verfahren nach einem der Ansprüche 1 und 2, **dadurch gekennzeichnet, dass** die besagte Analyse darin besteht, alle unterschiedlichen Sätze bestehend aus einem oder mehreren Lokalisierungsparameter(n) zu ermitteln und anschließend einen jeden der besagten unterschiedlichen Sätze bestehend aus einem oder mehreren Lokalisierungsparameter(n) zu zählen, und dass man jeden Satz bestehend aus einem oder mehreren Lokalisierungsparameter(n), welcher mit einer einen ausgewählten Grenzwert überschreitenden Anzahl assoziiert ist, speichert, wobei das Überschreiten des besagten Grenzwerts durch einen höheren Wert das besagte ausgewählte Kriterium bildet.

4. Verfahren nach einem der Ansprüche 1 und 2, **dadurch gekennzeichnet, dass** die besagte Analyse darin besteht, alle unterschiedlichen Sätze bestehend aus einem oder mehreren Lokalisierungsparameter(n) zu ermitteln und anschließend einen jeden der besagten unterschiedlichen Sätze bestehend aus einem oder mehreren Lokalisierungsparameter(n) zu zählen, um deren jeweilige Größenverhältnisse zueinander zu ermitteln, und dass man jeden Satz bestehend aus einem oder mehreren Lokalisteungsparameter(n), welcher mit einem einen ausgewählten Grenzwert überschreitenden Größenverhältnis assoziiert ist, speichert, wobei das Überschreiten des besagten Grenzwerts durch einen höheren Wert das besagte ausgewählte Kriterium bildet.

5. Verfahren nach einem der Ansprüche 1 bis 4, **dadurch gekennzeichnet, dass** die besagte erkannte geografische Zone in Übereinstimmung mit zumindest ihrem Erkennungszeitpunkt zwischengespeichert wirt.

6. Verfahren nach einem der Ansprüche 1 bis 5, **dadurch gekennzeichnet, dass** der besagte Satz bestehend aus einem oder mehreren Lokalisierungsparameter(n) nach der Analyse in Übereinstimmung mit ausgewählten Informationen gespeichert wird.

7. Verfahren nach einem der Ansprüche 5 und 6, **dadurch gekennzeichnet, dass** die besagten Informationen für einen Zeitabstand, mit welchem jeder dem besagten ausgewählten Kriterium entsprechende Satz von einem oder mehreren Lokalisierungsparameter(n) assoziiert ist, repräsentativ sind.

8. Verfahren nach einem der Ansprüche 1 bis 7, **dadurch gekennzeichnet, dass** es einen zusätzlichen Schritt umfasst, in welchem man den besagten gespeicherten Sätzen bestehend aus einem oder mehreren Lokalisierungsparameter(n) einen ausgewählten Status zuordnet.

9. Verfahren nach Anspruch 8 in Verbindung mit einem der Ansprüche 6 und 7, **dadurch gekennzeichnet, dass** die besagte Zuordnung eines Status automatisch und gemäß den besagten Informationen erfolgt.

10. Verfahren nach Anspruch 8, **dadurch gekennzeichnet, dass** die besagte Zuordnung eines Status vom Benutzer des besagten mobilen Telefongeräts (UE-1) durch die Auswahl eines Status unter einer Mehrzahl von auf einem Display seines mobilen Telefongeräts (UE-i) angezeigten Status initiiert wird.

11. Verfahren nach einem der Ansprüche 8 bis 10, **dadurch gekennzeichnet, dass** der besagte Status ein einer Betriebskonfiguration des besagten mobilen Telefongeräts (UE-i) zugeordnetes Feld ist.

12. Verfahren nach Anspruch 11, **dadurch gekennzeichnet, dass** das besagte Feld in einer Gruppe mindestens bestehend aus dem Feld "Wohnort", dem Feld "Arbeitsplatz" und dem Feld "Sonstige" gewählt wird.

13. Verfahren nach einem der Ansprüche 8 bis 12, **dadurch gekennzeichnet, dass** die besagte Betriebskonfiguration vom Benutzer des besagten mobilen Telefongeräts (UE-i) definiert wird.

14. Verfahren nach einem der Ansprüche 8 bis 13, **dadurch gekennzeichnet, dass** mindestens zwei unterschiedliche, dem besagten Status zugeordneten Kriterium entsprechende Sätze bestehend aus einem oder mehreren Lokalisierungsparameter(n) mit einem selben Status assoziiert werden können.

15. Verfahren nach einem der Ansprüche 1 bis 14, **dadurch gekennzeichnet, dass** jeder Satz bestehend aus einem oder mehreren Lokalisierungsparameter(n) mindestens einen Parameter enthält, welcher für die Kennung einer Zelle des Netzwerks repräsentativ ist.

16. Verfahren nach Anspruch 15, **dadurch gekennzeichnet, dass** bestimmte Sätze bestehend aus einem oder mehreren Lokalisierungsparameter(n) mindestens einen zusätzlichen Parameter enthalten, welcher in einer Gruppe mindestens bestehend aus Funkinformationen, die für die Empfangsstärke einer Basisstation (Node B), welche die besagte Zelle steuert, und/oder für die Entfernung bis zur Basisstation (Node B), welche die besagte Zelle steuert, repräsentativ sind, gewählt wird.

17. Vorrichtung (D) zur Verarbeitung von Lokalisierungsdaten für ein mobiles Telefongerät (OE-i), welches in geografischen Zonen (Cj) eines Kommunikationsnetzwerks bewegt werden kann, wobei die besagten geografischen Zonen (Cj) durch Sätze bestehend aus mindestens einem Lokalisierungsparameter definiert sind, **dadurch gekennzeichnet, dass** sie Verarbeitungsmittel (M) umfasst, welche dazu ausgelegt sind, i) zu ausgewählten Zeitpunkten die geografische Zone (Cj), in welcher sich das besagte mobile Telefongerät (UE-i) befindet, zu ermitteln, und anschließend einen Satz bestehend aus einem oder mehreren Parameter(n), welcher für die besagte ermittelte geografische Zone repräsentativ ist, zwischenzuspeichern, und ii) gemäß ausgewählten Zeitabständen die besagten gespeicherten Sätze bestehend aus einem oder mehreren Lokalisierungsparameter(n) zu analysieren, um jeden Satz bestehend aus einem oder mehreren Parameter(n), welcher mindestens einem ausgewählten Kriterium entspricht, zu speichern.

18. Vorrichtung nach Anspruch 17, **dadurch gekennzeichnet, dass** die besagten Verarbeitungsmittel (M) dazu ausgelegt sind, den besagten Schritt des Erkennens periodisch auszuführen.

19. Vorrichtung nach einem der Ansprüche 17 und 18, **dadurch gekennzeichnet, dass** die besagten Verarbeitungsmittel (M) dazu ausgelegt sind, die besagte Analyse auf der Basis einer Ermittlung der unterschiedlichen Sätze bestehend aus einem oder mehreren Lokalisierungsparameter(n) und des anschließenden Zählens eines jeden der besagten unterschiedlichen Sätze bestehend aus einem oder mehreren Lokalisierungsparameter(n) auszuführen und jeden mit einer einen gewählten Grenzwert überschreitenden Anzahl assoziierten Satz bestehend aus einem oder mehreren Lokalisierungsparameter(n) zu speichern, wobei das Überschreiten des besagten Grenzwerts durch einen höheren Wert das besagte ausgewählte Kriterium bildet.

20. Vorrichtung nach einem der Ansprüche 17 und 18, **dadurch gekennzeichnet, dass** die besagten Verarbeitungsmittel (M) dazu ausgelegt sind, die besagte Analyse auf der Basis einer Ermittlung der verschiedenen Sätze bestehend aus einem oder mehreren Lokalisierungsparameter(n) und des anschießenden Zählens eines jeden der besagten verschiedenen Sätze bestehend aus einem oder mehreren Lokalisierungsparameter(n) auszuführen, um deren jeweilige Größenverhältnisse zueinander zu ermitteln, und jeden mit einem einen gewählten Grenzwert überschreitenden Größenverhältnis assoziierten Satz bestehend aus einem oder mehreren Lokalisierungsparameter(n) zu speichern, wobei das Überschreiten des besagten Grenzwerts durch einen höheren Wert das besagte ausgewählte Kriterium bildet.

21. Vorrichtung nach einem der Ansprüche 17 bis 20, **dadurch gekennzeichnet, dass** die besagten Verarbeitungsmittel (M) dazu ausgelegt sind, die besagte erkannte geografische Zone in Übereinstimmung mit zumindest ihrem Erkennungszeitpunkt zwischenzuspeichern.

22. Vorrichtung nach einem der Ansprüche 17 bis 21, **dadurch gekennzeichnet, dass** die besagten Verarbeitungsmittel (M) dazu ausgelegt sind, den besagten Satz bestehend aus einem oder mehreren Lokalisierungsparameter(n) nach der Analyse in Übereinstimmung mit ausgewählten Informationen zu speichern.

23. Vorrichtung nach einem der Ansprüche 21 bis 22, **dadurch gekennzeichnet, dass** die besagten Informationen für einen Zeitabstand, mit welchem jeder dem besagten ausgewählten Kriterium entsprechende Satz bestehend aus einem oder mehreren Lokalisierungsparameter(n) assoziiert ist, repräsentativ sind.

24. Vorrichtung nach einem der Ansprüche 17 bis 24, **dadurch gekennzeichnet, dass** die besagten Verarbeitungsmittel (M) dazu ausgelegt sind, den besagten gespeicherten Sätzen bestehend aus einem oder mehreren Lokalisierungsparameter(n) einen ausgewählten Statuszuzuordnen.

25. Vorrichtung nach Anspruch 24 in Verbindung mit einem der Ansprüche 22 und 23, **dadurch gekennzeichnet, dass** die besagten Verarbeitungsmittel (M) dazu ausgelegt sind, die besagte Zuordnung eines Status automatisch und gemäß den besagten Informationen durchzuführen.

26. Vorrichtung nach Anspruch 24, **dadurch gekennzeichnet, dass** die besagten Verarbeitungsmittel (M) dazu ausgefegt sind, die besagte Zuordnung eines Status nach der Auswahl durch den Benutzer des besagten mobilen Telefongeräts (UE-i) eines Status unter einer Mehrzahl von auf einem Display seines mobilen Telefongeräts (UE-i) angezeigten Status durchzuführen.

27. Vorrichtung nach einem der Ansprüche 24 bis 26, **dadurch gekennzeichnet, dass** der besagte Status ein einer der besagten mobilen Telefongeräts (UE-i) zugeordnetes Feld ist

28. Vorrichtung nach Anspruch 27, **dadurch gekennzeichnet, dass** das besagte Feld in einer Gruppe mindestens bestehend aus dem Feld "Wohnort", dem Feld "Arbeitsplatz" und dem Feld "Sonstige" gewählt wird.

29. Vorrichtung nach einem der Ansprüche 24 bis 28, **dadurch gekennzeichnet, dass** die besagte Betriebskonfiguration vom Benutzer des besagten mobilen Telefongeräts (UE-i) definiert wird,

30. Vorrichtung nach einem der Ansprüche 24 bis 29, **dadurch gekennzeichnet, dass** die besagten Verarbeitungsmittel (M) dazu ausgelegt sind, einem selben Status mindestens zwei verschiedene Sätze bestehend aus einem oder mehreren Lokalisierungsparameter(n), welche dem besagten Kriterium entsprechen, zuzuordnen.

31. Vorrichtung nach einem der Ansprüche 17 bis 30, **dadurch gekennzeichnet, dass** jeder Satz bestehend aus einem oder mehreren Lokaliserungsparemeter(n) mindestens einen Parameter enthält, welcher für die Kennung einer Zelle des Netzwerks repräsentativ ist.

32. Vorrichtung nach Anspruch 31, **dadurch gekennzeichnet, dass** bestimmte Sätze bestehend aus einem oder mehreren Lokalisierungsparameter(n) mindestens einen zusätzlichen Parameter enthalten, welcher in einer Gruppe mindestens bestehend aus Funkinformationen, die für die Empfangsstärke der Basisstation (Node B), welche die besagte Zelle steuert, und/oder für die Entfernung bis zur Basisstation (Node B), welche die besagte Zelle steuert, repräsentativ sind, gewählt wird.

33. Mobiles Telefongerät (UE-i), welches in durch Sätze bestehend aus mindestens einem Lokalisierungsparameter definierten geografischen Zonen (Cj) eines Kommunikationsnetzwerks bewegt werden kann, **dadurch gekennzeichnet, dass** es eine Verarbeitungsvorrichtung (D) gemäß einem der Ansprüche 17 bis 32 umfasst.
